# EUROPEAN PATENT APPLICATION

(11) **EP 4 541 714 A1**
(43) Date of publication of application: **23.04.2025**
(21) Application number: 24195044.3
(22) Date of filing: 16.08.2024
(51) Int. Cl.: B64D 9/00

(54) **CARGO RESTRAINT SYSTEM FOR JOINT MODULAR INTERMODAL CONTAINERS**

(30) Priority: 20.10.2023 US 202363591873 P; 06.06.2024 US 202418735987; 29.07.2024 US 202418787857
(71) Applicant: Goodrich Corporation, Charlotte, NC 28217-4578 (US)
(72) Inventor: MEYER, Zachary, Bismarck (US); LIMKE, Jacob LeRoy, Jamestown (US); SCHULZ, Michael A., Ponsford (US); GRIFFIN, Ian J., Snohomish (US)
(74) Representative: Dehns

(57) **Abstract**

A cargo restraint assembly (402) for a cargo handling system (100) is provided. The cargo restraint assembly (402) includes a base assembly (504). The base assembly (504) includes a plunger (508) and a compression spring (522). Responsive to being activated, the plunger (508) is configured to extend in a first direction into an opening (304) within a modular container (302) thereby restraining the modular container (302) in a second direction, the second direction being perpendicular to the first direction. The compression spring (504) provides a restraint to keep the plunger (508) locked in an outwardly extended state in an activated state or locked in an inwardly retracted state in a deactivated state.

## Description

### GOVERNMENT LICENSE RIGHTS

This invention was made with Government support under SPE8EJ-20-D-0012, SPE8EL-20-F-1FT1 awarded by the United States Navy. The Government has certain rights in this invention.

### CROSS-REFERENCE TO RELATED APPLICATIONS

This application is a continuation in part of U.S. Patent Application No. 18/735,987, filed June 6, 2024, entitled "CARGO RESTRAINT SYSTEM FOR JOINT MODULAR INTERMODAL CONTAINERS" (hereinafter the `987 Application). The `987 application claims priority to and benefit of U.S. Provisional Application Serial No. 63/591,873, filed October 20, 2023, and titled "CARGO RESTRAINT SYSTEM FOR JOINT MODULAR INTERMODAL CONTAINERS" (hereinafter the `873 Application). The `987 and `873 Applications are hereby incorporated by reference in their entirety for all purposes.

### FIELD

The present disclosure generally relates to the field of cargo handling systems and, more particularly, to a cargo restraint system for joint modular intermodal containers.

### BACKGROUND

Aircrafts configurable for transportation of cargo, i.e. palletized or containerized cargo, rely on adequate spacing of pallets or containers to be maintained to avoid inadvertent contact or load transfer between pallets or containers during flight. Typically, the cargo hold layout is variable enough to allow for pallets or containers to be appropriately spaced to ensure no contact is made. However, in some scenarios, spacing may need to be reduced for various reasons to the degree that, with tolerancing considered, pallets or containers may contact each other during ground handling or in-flight.

### SUMMARY

According to an aspect, a cargo restraint assembly for a cargo handling system is disclosed. The cargo restraint assembly includes a plunger and a compression spring. Responsive to being activated, the plunger is configured to extend in a first direction into an opening within a modular container thereby restraining the modular container in a second direction, the second direction being perpendicular to the first direction. The compression spring is configured to provide a restraint to keep the plunger locked in an outwardly extended state in an activated state or locked in an inwardly retracted state in a deactivated state. In various embodiments, the cargo restraint assembly includes an attenuation lock. In various embodiments, the attenuation lock is configured to block the plunger from attenuating from the activated state unless acted upon by an actuation/de-actuation lever.

In various embodiments, the base assembly further includes the actuation/de-actuation lever. In various embodiments, the actuation/de-actuation lever is mechanically and rotatably coupled to the base assembly via a rotation pin. In various embodiments, the actuation/de-actuation lever is configured to rotate about axis through a longitudinal center of the rotation pin.

In various embodiments, the base assembly further includes a first linkage, a second linkage, and a plunger interconnect plate. In various embodiments, the actuation/de-actuation lever is coupled to the plunger via the first linkage, the second linkage, and the plunger interconnect plate.

In various embodiments, the actuation/de-actuation lever is coupled to a first end of the first linkage via the rotation pin such that the first linkage rotates simultaneously with the actuation/de-actuation lever.

In various embodiments, a second end of the first linkage is mechanically and rotatably coupled to a first end of the second linkage via a first pin. In various embodiments, a second end of the second linkage is mechanically and rotatably coupled to the plunger interconnect plate via a second pin. In various embodiments, the plunger interconnect plate is coupled to the plunger.

In various embodiments, the mechanical and rotatable coupling between the second end of the first linkage and the first end of the second linkage is configured to move over a center line thereby providing an over-center locking mechanism that locks the plunger at an outermost extension in the first direction from the base assembly into the opening within the modular container.

In various embodiments, the compression spring provides the restraint to keep the second end of the first linkage that is mechanically and rotatably coupled to the first end of the second linkage moved over a center line in the activated state and to keep the second end of the first linkage that is mechanically and rotatably coupled to the first end of the second linkage retracted in the deactivated state.

In various embodiments, the cargo restraint assembly is a first cargo restraint assembly and the base assembly further includes an interface. In various embodiments, the interface is configured to receive an actuation shaft/tube that couples the first cargo restraint assembly to a second cargo restraint assembly in order that the first cargo restraint assembly and the second cargo restraint assembly are activated or deactivated simultaneously.

In various embodiments, the base assembly further includes a set of anchors integrated into the cargo restraint assembly. In various embodiments, the set of anchors couple the cargo restraint assembly to a cargo deck of a cargo compartment.

According to an aspect, also disclosed herein is a cargo handling system. The cargo handling system includes a plurality of cargo restraint assemblies. Each cargo restraint assembly of the plurality of cargo restraint assemblies includes a base assembly. The base assembly includes a plunger and a compression spring. Responsive to being activated, the plunger is configured to extend in a first direction into an opening within a modular container thereby restraining the modular container in a second direction, the second direction being perpendicular to the first direction. The compression spring is configured to provide a restraint to keep the plunger locked in an outwardly extended state in an activated state or locked in an inwardly retracted state in a deactivated state. In various embodiments, the base assembly includes an attenuation lock. In various embodiments, the attenuation lock is configured to block the plunger from attenuating from the activated state unless acted upon by an actuation/de-actuation lever.

In various embodiments, the base assembly further includes the actuation/de-actuation lever. In various embodiments, the actuation/de-actuation lever is mechanically and rotatably coupled to the base assembly via a rotation pin. In various embodiments, the actuation/de-actuation lever is configured to rotate about axis through a longitudinal center of the rotation pin.

In various embodiments, the base assembly further includes a first linkage, a second linkage, and a plunger interconnect plate. In various embodiments, the actuation/de-actuation lever is coupled to the plunger via the first linkage, the second linkage, and the plunger interconnect plate.

In various embodiments, the actuation/de-actuation lever is coupled to a first end of the first linkage via the rotation pin such that the first linkage rotates simultaneously with the actuation/de-actuation lever.

In various embodiments, a second end of the first linkage is mechanically and rotatably coupled to a first end of the second linkage via a first pin. In various embodiments, a second end of the second linkage is mechanically and rotatably coupled to the plunger interconnect plate via a second pin. In various embodiments, the plunger interconnect plate is coupled to the plunger.

In various embodiments, the mechanical and rotatable coupling between the second end of the first linkage and the first end of the second linkage is configured to move over a center line thereby providing an over-center locking mechanism that locks the plunger at an outermost extension in the first direction from the base assembly into the opening within the modular container.

In various embodiments, the compression spring provides the restraint to keep the second end of the first linkage that is mechanically and rotatably coupled to the first end of the second linkage moved over a center line in the activated state and to keep the second end of the first linkage that is mechanically and rotatably coupled to the first end of the second linkage retracted in the deactivated state.

In various embodiments, the cargo restraint assembly is a first cargo restraint assembly and the base assembly further includes an interface. In various embodiments, the interface is configured to receive an actuation shaft/tube that couples the first cargo restraint assembly to a second cargo restraint assembly in order that the first cargo restraint assembly and the second cargo restraint assembly are activated or deactivated simultaneously.

In various embodiments, the base assembly further includes a set of anchors integrated into the cargo restraint assembly. In various embodiments, the set of anchors couple the cargo restraint assembly to a cargo deck of a cargo compartment.

According to an aspect, also disclosed herein is an aircraft. The aircraft includes a cargo deck and a cargo handling system disposed on the cargo deck. The cargo handling system includes a plurality of cargo restraint assemblies. Each cargo restraint assembly of the plurality of cargo restraint assemblies includes a base assembly. The base assembly includes a plunger and a compression spring. Responsive to being activated, the plunger is configured to extend in a first direction into an opening within a modular container thereby restraining the modular container in a second direction, the second direction being perpendicular to the first direction. The compression spring is configured to provide a restraint to keep the plunger locked in an outwardly extended state in an activated state or locked in an inwardly retracted state in a deactivated state. In various embodiments, the base assembly includes an attenuation lock. In various embodiments, the attenuation lock is configured to block the plunger from attenuating from the activated state unless acted upon by an actuation/de-actuation lever.

In various embodiments, each cargo restraint assembly of the plurality of cargo restraint assemblies further includes an interface. In various embodiments, the interface is configured to receive an actuation shaft/tube that couples a first cargo restraint assembly of the plurality of cargo restraint assemblies to a second cargo restraint assembly of the plurality of cargo restraint assemblies in order that the first cargo restraint assembly and the second cargo restraint assembly are activated or deactivated simultaneously.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates an aircraft (e.g., a helicopter) with a cargo handling system, in accordance with various embodiments.
FIG. 2 illustrates a perspective view of a portion of a reconfigurable cargo handling system, in accordance with various embodiments.
FIG. 3 illustrates a side view of a set of modular containers loaded into a cargo compartment of a cargo handling system, in accordance with various embodiments.
FIG. 4 illustrates a top view of a set of modular containers loaded into a cargo compartment of a cargo handling system, in accordance with various embodiments.
FIGS. 5A and 5B illustrate cross-sectional views of a cargo restraint assembly in an activated state at two different levels in the x-direction, in accordance with various embodiments.
FIG. 6 illustrates a cross-sectional view of a cargo restraint assembly in a deactivated state, in accordance with various embodiments.
FIG. 7 illustrates an isometric view of a cargo restraint assembly being coupled to another cargo restraint assembly, in accordance with various embodiments.
FIGS. 8A and 8B illustrate cross-sectional views of a cargo restraint assembly, including an attenuation lock, in an activated state at two different levels in the x-direction, in accordance with various embodiments.
FIG. 9 illustrates a cross-sectional view of a cargo restraint assembly, including an attenuation lock, in a deactivated state, in accordance with various embodiments.
FIG. 10 illustrates an isometric view of a cargo restraint assembly, including an attenuation lock, being coupled to another cargo restraint assembly, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

When restraining cargo within a cargo compartment of an aircraft, typical restraint systems for containers, such as a joint modular intermodal container (JMIC), rely on cargo nets and tiedown fittings to restrain the containers. Strapping down each container individually takes critical time to perform the task. The more containers restrained, the more intricate the restraint system and more time required.

Disclosed herein are systems and methods for utilizing a set of restraints that are coupled to the cargo compartment floor and comprise an action, i.e. an extension in a y-direction or a port/starboard direction. In various embodiments, the extension in the y-direction engages with and prevents motion of the cargo container in the x-direction and the z-direction. In various embodiments, when the set of restraints are utilized on both sides of the cargo container, the extension of the set of restraints further prevents motion of the cargo in the y-direction. In various embodiments, the action performed by the restraints may be accomplished via linkage systems that utilizes an over-center locking mechanism to ensure positive engagement of the cargo container.

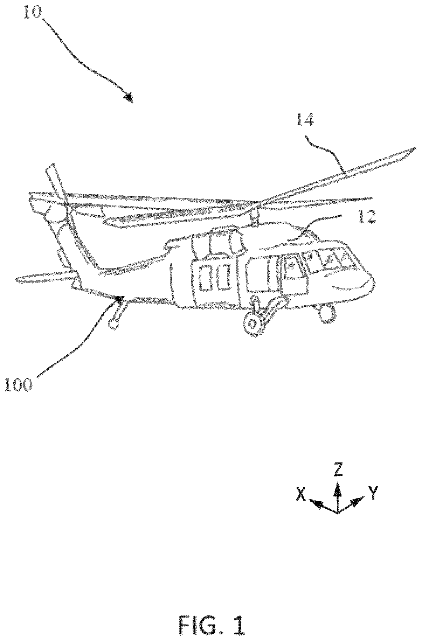

Referring now to FIG. 1, an aircraft (e.g., a helicopter 10) with a cargo handling system 100 is illustrated, in accordance with various embodiments. The helicopter 10 includes an airframe 12 mechanically coupled to a main rotor 14. Main rotor 14 may include a plurality of rotary blades. In various embodiments, the cargo handling system 100 may be disposed at an aft end of the airframe 12.

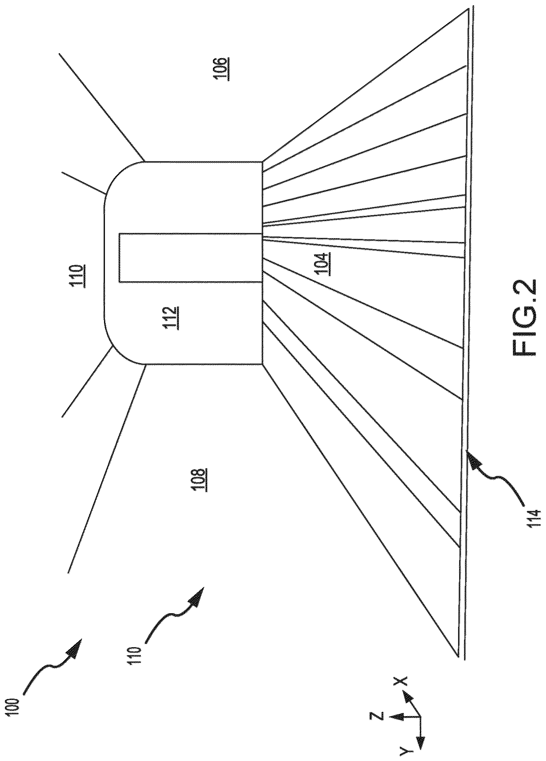

Referring now to FIG. 2, the cargo handling system 100 from FIG. 1 is illustrated in a configuration for transportation of cargo, in accordance with various embodiments. In various embodiments, the cargo handling system 100 includes a cargo compartment 102 into which palletized or containerized cargo may be loaded. In various embodiments, the cargo compartment 102 includes a cargo deck 104, right-side wall 106, left-side wall 108, ceiling 110, forward end 112, and aft or rear end 114. In various embodiments, the cargo compartment 102 is defined by the forward end 112 and the aft or rear end 114 that is spaced from the forward end 112 along a length (or longitudinal) dimension of the cargo compartment 102. In various embodiments, the cargo compartment 102 is defined by the right-side wall 106 and a left-side wall 108 that is spaced from the right-side wall 106 along a width (or lateral) dimension of the cargo compartment 102. In various embodiments, loading of the cargo into the cargo compartment 102 may be aided by roller trays coupled to or embedded within the cargo deck 104. In various embodiments, once the cargo is loaded, the cargo may be restrained by a set of restraint mechanisms that coupled to the cargo deck 104 via fittings that are either integrated into the cargo deck 104 or integrated into an in-floor adapter integrated within the cargo deck 104. In various embodiments, the fittings may be integrated into the roller trays that are coupled to or embedded within the cargo deck 104.

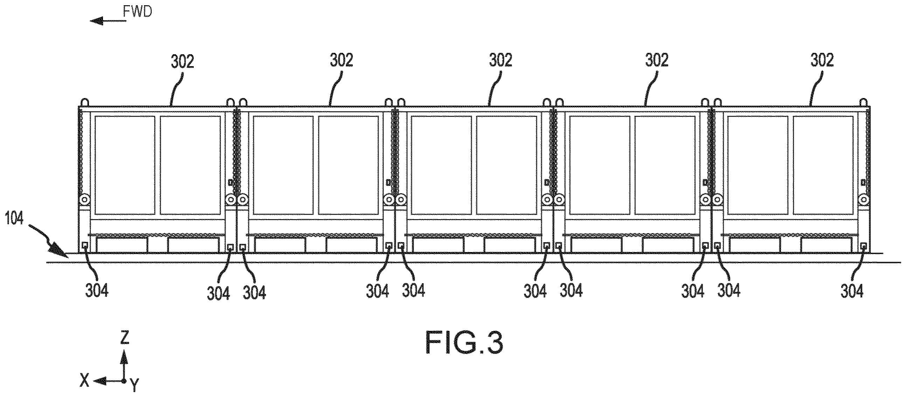

Referring now to FIG. 3, a side view of a set of modular containers loaded into a cargo compartment 102 of a cargo handling system 100 from FIG. 2 is illustrated, in accordance with various embodiments. In various embodiments, the modular containers 302 are loaded onto the cargo deck 104 and spaced apart in a forward (FWD) direction along the cargo deck 104. In various embodiments, the modular containers 302 may be spaced apart from each other. In various embodiments, the spacing may be between ¼ inch (0.635 centimeter) and 1 inch (2.54 centimeters). In various embodiments, the spacing may be between ¼ inch (0.635 centimeter) and ½ inch (1.27 centimeters). In various embodiments, the spacing may be 5/16 inch (0.7937 centimeter). In various embodiments, the modular containers 302 include interface holes 304 for interfacing with a respective cargo restraint assembly.

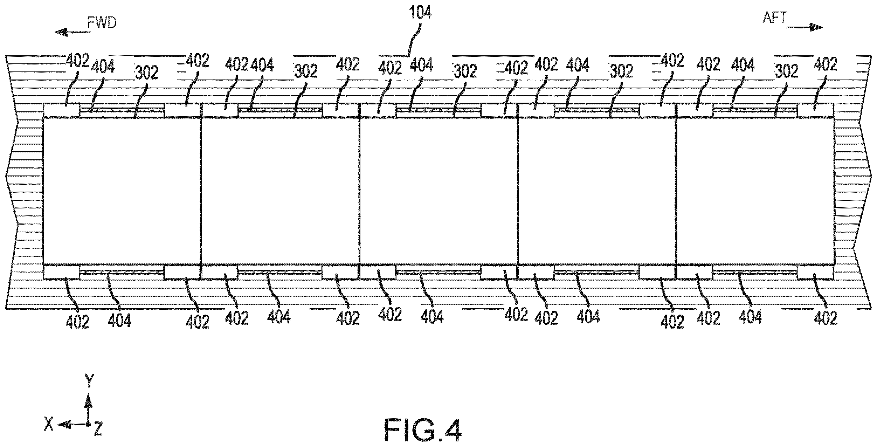

Referring now to FIG. 4, a top view of a set of modular containers loaded into a cargo compartment 102 of a cargo handling system 100 from FIG. 2 is illustrated, in accordance with various embodiments. In various embodiments, the modular containers 302 are loaded onto the cargo deck 104 and spaced apart in a forward (FWD) direction along the cargo deck 104. In various embodiments, each of the modular containers 302 may be restrained by a set of cargo restraint assemblies 402, two on each side of each cargo container, that are each coupled to the cargo deck 104 and positioned adjacent to the corners of each of the modular containers 302. In various embodiments, the two cargo restraint assemblies on each side of the cargo container may be coupled together via an actuation shaft/tube 404 thereby providing for the actuation/de-actuation of the two cargo restraint assemblies simultaneously.

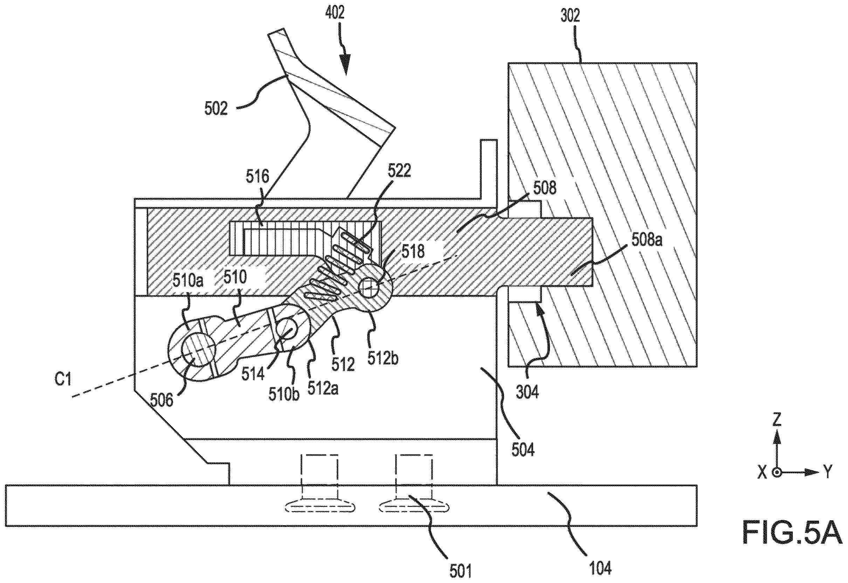

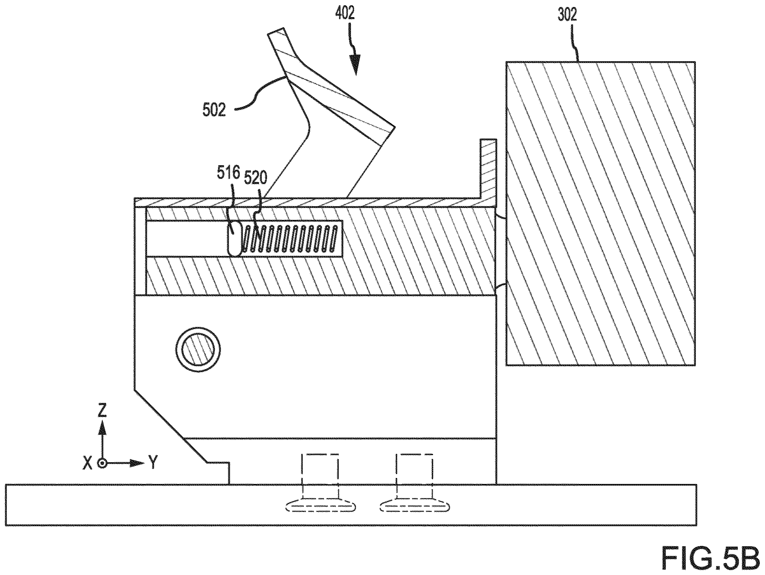

Referring now to FIGS. 5A and 5B, cross-sectional views of a cargo restraint assembly 402 in an activated state at two different levels in the x-direction are illustrated, in accordance with various embodiments. In various embodiments, the cargo restraint assembly 402 may be coupled to cargo deck 104 via fittings that are either integrated into the cargo deck 104 or integrated into an in-floor adapter within the cargo deck 104 and via a set of anchors 501 integrated into the cargo restraint assembly 402. In various embodiments, the cargo restraint assembly 402 includes an actuation/de-actuation lever 502 that is coupled to base assembly 504 of the cargo restraint assembly 402 via a rotation pin 506. In that regard, in various embodiments, the actuation/de-actuation lever 502 rotates about axis through a longitudinal center of the rotation pin 506.

In various embodiments, the actuation/de-actuation lever 502 is substantially a foot pedal that, responsive to being released and rotated in a clockwise direction about the rotation pin 506, activates the cargo restraint assembly 402 thereby allowing the plunger 508 to engage with an interface hole 304 of the modular container 302. In that regard, in various embodiments, the outer dimension of the plunger 508 may substantially match an inner dimension of the interface hole 304. In various embodiments, the base assembly 504 may include a first positive stop that prevents a rotation of the actuation/de-actuation lever 502 beyond a defined clockwise angle. In various embodiments, a first linkage 510 includes a first end 510a and a second end 510b. In various embodiments, the first end 510a is coupled to and rotates simultaneously with the actuation/de-actuation lever 502 via the rotation pin 506. In various embodiments, the second end 510b is mechanically and rotatably coupled to a second linkage 512. In various embodiments, the second linkage 512 includes a first end 512a and a second end 512b. In that regard, in various embodiments, the second end 510b of the first linkage is mechanically and rotatably coupled to the first end 512a of the second linkage via pin 514. In various embodiments, the second end 512b is mechanically and rotatably coupled to a plunger interconnect plate 516. In various embodiments, the plunger interconnect plate 516 translates in a positive and negative y-direction based on the activation/deactivation of the actuation/de-actuation lever 502. In that regard, the second end 512b is mechanically and rotatably coupled to the plunger interconnect plate 516 via pin 518. In various embodiments, a distal end 508a of the plunger 508 is configured to extend outwardly, in a positive y-direction, from the base assembly 504 into the interface hole 304 of the modular container 302. In that regard, responsive to being extended, the plunger 508 provides restraint in an x-direction, i.e. preventing the modular container from moving in an x-direction and a z-direction.

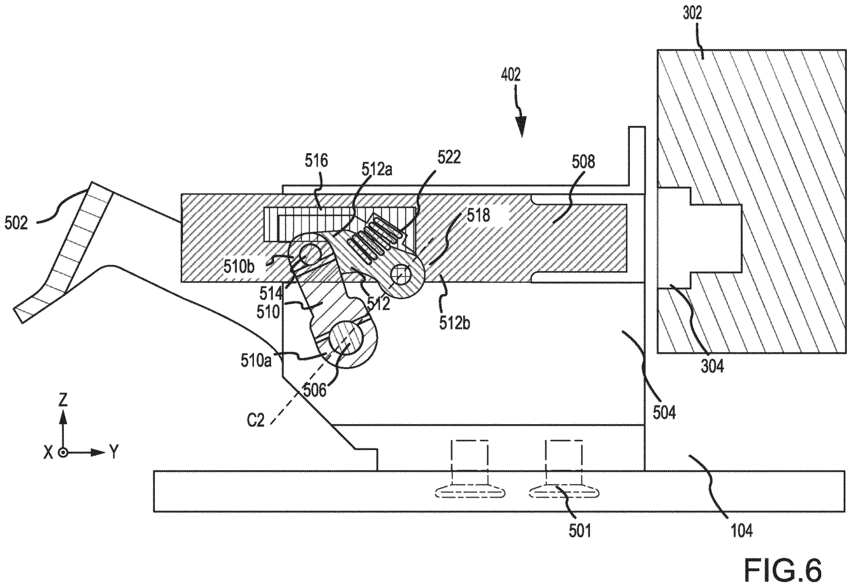

In various embodiments, as the user activates the cargo restraint assembly 402, an attenuation spring 520, which is biased against a rear, in a negative y-direction, of the plunger interconnect plate 516, provides for attenuation of the plunger 508 in a positive y-direction, to help lock the plunger 508 into the interface hole 304 of the modular container 302. In various embodiments, the attenuation provided by the attenuation spring 520 allows the user to activate the cargo restraint assembly 402 by releasing and rotating the actuation/de-actuation lever 502 in a clockwise direction about the rotation pin 506, which causes the coupling of the second end 510b of the first linkage to the first end 512a of the second linkage via pin 514 to move over the center line C1 between the rotation pin 506 and the pin 518. In various embodiments, compression spring 522 provides a restraint to keep the second end 510b of the first linkage 510 mechanically and rotatably coupled to the first end 512a of the second linkage 512 via pin 514 moved over the center line C1 in an activated state and to keep the second end 510b of the first linkage that is mechanically and rotatably coupled to the first end 512a of the second linkage 512 retracted over centerline C2 illustrated in FIG. 6 in a deactivated state. In that regard, the compression spring 522 provides a restraint to keep the plunger 508 locked in an outwardly extended state in an activated state or locked in an inwardly retracted state in a deactivated state. In various embodiments, responsive to the cargo restraint assembly 402 being activated and the plunger 508 not immediately locking into the interface hole 304 of the modular container 302, the attenuation provided by the attenuation spring 520 keeps a positive force of the plunger in the y-direction. In that regard, the user may be able to rock the modular container 302 FWD/AFT or side-to-side to align the plunger 508 with the interface hole 304 of the modular container 302 allowing the positive force of the plunger in the y-direction to "pop" the plunger 508 into the interface hole 304 of the modular container 302.

Referring now to FIG. 6, a cross-sectional view of a cargo restraint assembly 402 in a deactivated state is illustrated, in accordance with various embodiments. In various embodiments, the cargo restraint assembly 402 may be coupled to cargo deck 104 via fittings that are either integrated into the cargo deck 104 or integrated into an in-floor adapter within the cargo deck 104 and via the set of anchors 501 integrated into the cargo restraint assembly 402. In various embodiments, the cargo restraint assembly 402 includes the actuation/de-actuation lever 502 that is coupled to base assembly 504 of the cargo restraint assembly 402 via the rotation pin 506. In that regard, in various embodiments, the actuation/de-actuation lever 502 rotates about axis through the longitudinal center of the rotation pin 506.

In various embodiments, the actuation/de-actuation lever 502 is substantially a foot pedal that, responsive to being depressed and rotated in a counterclockwise direction about the rotation pin 506, deactivates the cargo restraint assembly 402 thereby disengaging the plunger 508 from the modular container 302. In various embodiments, the base assembly 504 may include a second positive stop that prevents a rotation of the actuation/de-actuation lever 502 beyond a defined counterclockwise angle. In various embodiments, a first linkage 510 includes the first end 510a and the second end 510b. In various embodiments, the first end 510a is coupled to and rotates simultaneously with the actuation/de-actuation lever 502 via the rotation pin 506. In various embodiments, the second end 510b is mechanically and rotatably coupled to the second linkage 512. In various embodiments, the second linkage 512 includes the first end 512a and the second end 512b. In that regard, in various embodiments, the second end 510b of the first linkage is mechanically and rotatably coupled to the first end 512a of the second linkage via pin 514. In various embodiments, the second end 512b is mechanically and rotatably coupled to the plunger interconnect plate 516. In various embodiments, the plunger interconnect plate 516 translates in a positive and negative y-direction based on the activation/deactivation of the actuation/de-actuation lever 502. In that regard, the second end 512b is mechanically and rotatably coupled to the plunger interconnect plate 516 via pin 518. In various embodiments, a distal end 508a of the plunger 508 is configured to retract inwardly, in a negative y-direction, from the base assembly 504 into the interface hole 304 of the modular container 302. In various embodiments, as the user deactivates the cargo restraint assembly 402, the attenuation spring 520, as is illustrated in FIG 5B, which is biased against a rear, in a negative y-direction, of the plunger interconnect plate 516, is compressed against the rear of the plunger interconnect plate 516. In various embodiments, compression spring 522 provides a restraint to keep the second end 510b of the first linkage 510 mechanically and rotatably coupled to the first end 512a of the second linkage 512 via pin 514 moved over the center line C1 in FIG. 5A in an activated state and to keep the second end 510b of the first linkage that is mechanically and rotatably coupled to the first end 512a of the second linkage 512 retracted over centerline C2 in a deactivated state. In that regard, the compression spring 522 provides a restraint to keep the plunger 508 locked in an outwardly extended state in an activated state or locked in an inwardly retracted state in a deactivated state.

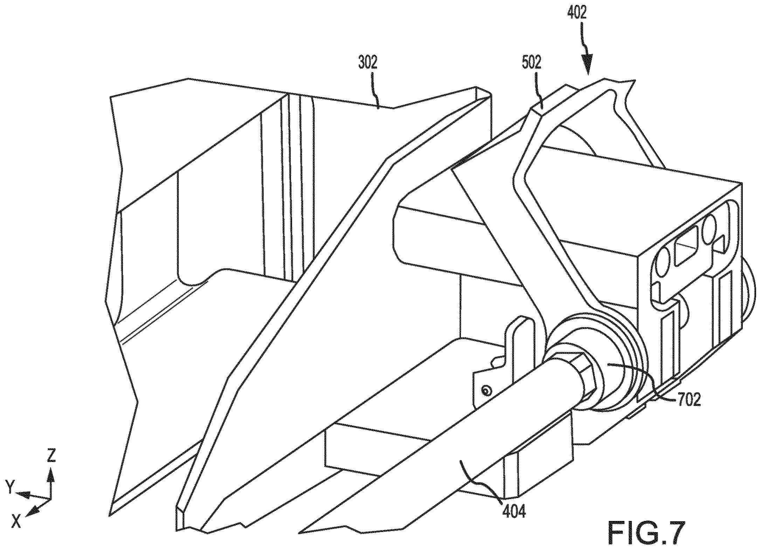

Referring now to FIG. 7, an isometric view of a cargo restraint assembly 402 being coupled to another cargo restraint assembly is illustrated, in accordance with various embodiments. In various embodiments, as the user activates/deactivates the actuation/de-actuation lever 502, an interface 702, which may be mechanically coupled to both sides of the actuation/de-actuation lever 502, rotates with the rotation of the actuation/de-actuation lever 502. In various embodiments, when the actuation shaft/tube 404 is coupled between the interface 702 and a similar interface 702 on a paired cargo restraint assembly 402 associated with a same modular container 302 and the actuation/de-actuation lever 502 is activated/deactivated, both of the paired cargo restraint assemblies 402 activate or deactivate together.

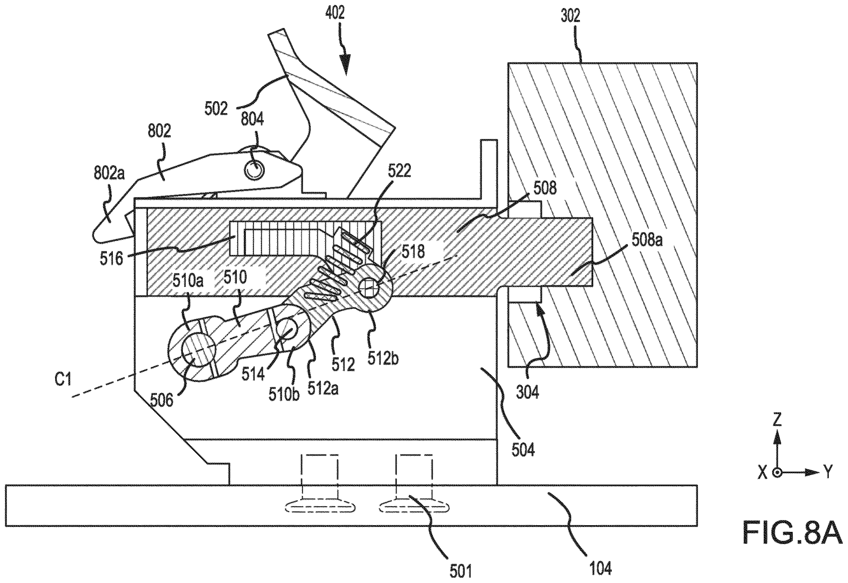

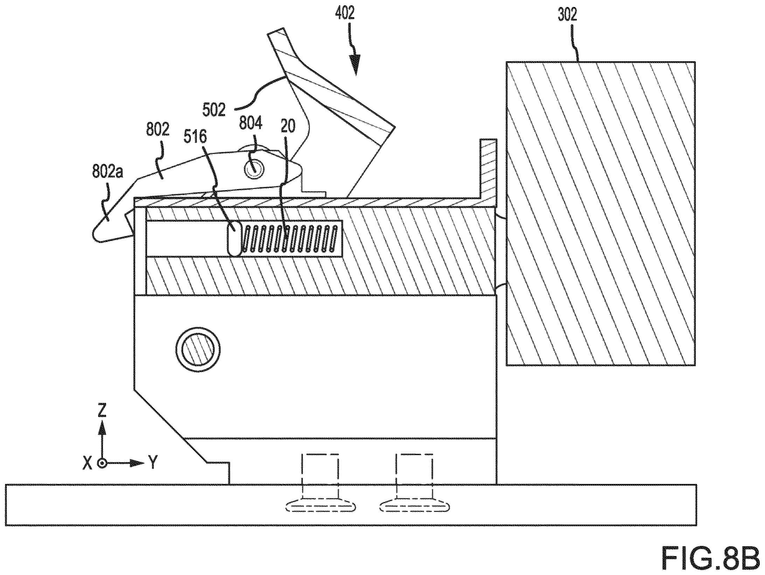

Referring now to FIGS. 8A and 8B, cross-sectional views of a cargo restraint assembly 402, including an attenuation lock, in an activated state at two different levels in the x-direction are illustrated, in accordance with various embodiments. It is noted that FIGS. 8A and 8B are similar to previously described FIGS. 5A and 5B but include an attenuation lock to prevent the plunger 508 from attenuating, i.e. disengaging, from the interface hole 304 of the modular container 302 once the plunger 508 has engaged with the interface hole 304 of the modular container 302, as is described hereafter. In that regard, in various embodiments, the cargo restraint assembly 402 may be coupled to cargo deck 104 via fittings that are either integrated into the cargo deck 104 or integrated into an in-floor adapter within the cargo deck 104 and via a set of anchors 501 integrated into the cargo restraint assembly 402. In various embodiments, the cargo restraint assembly 402 includes an actuation/de-actuation lever 502 that is coupled to base assembly 504 of the cargo restraint assembly 402 via a rotation pin 506. In that regard, in various embodiments, the actuation/de-actuation lever 502 rotates about axis through a longitudinal center of the rotation pin 506.

In various embodiments, the actuation/de-actuation lever 502 is substantially a foot pedal that, responsive to being released and rotated in a clockwise direction about the rotation pin 506, activates the cargo restraint assembly 402 thereby allowing the plunger 508 to engage with an interface hole 304 of the modular container 302. In that regard, in various embodiments, the outer dimension of the plunger 508 may substantially match an inner dimension of the interface hole 304. In various embodiments, the base assembly 504 may include a first positive stop that prevents a rotation of the actuation/de-actuation lever 502 beyond a defined clockwise angle. In various embodiments, a first linkage 510 includes a first end 510a and a second end 510b. In various embodiments, the first end 510a is coupled to and rotates simultaneously with the actuation/de-actuation lever 502 via the rotation pin 506. In various embodiments, the second end 510b is mechanically and rotatably coupled to a second linkage 512. In various embodiments, the second linkage 512 includes a first end 512a and a second end 512b. In that regard, in various embodiments, the second end 510b of the first linkage is mechanically and rotatably coupled to the first end 512a of the second linkage via pin 514. In various embodiments, the second end 512b is mechanically and rotatably coupled to a plunger interconnect plate 516. In various embodiments, the plunger interconnect plate 516 translates in a positive and negative y-direction based on the activation/deactivation of the actuation/de-actuation lever 502. In that regard, the second end 512b is mechanically and rotatably coupled to the plunger interconnect plate 516 via pin 518. In various embodiments, a distal end 508a of the plunger 508 is configured to extend outwardly, in a positive y-direction, from the base assembly 504 into the interface hole 304 of the modular container 302. In that regard, responsive to being extended, the plunger 508 provides restraint in an x-direction, i.e. preventing the modular container from moving in an x-direction and a z-direction.

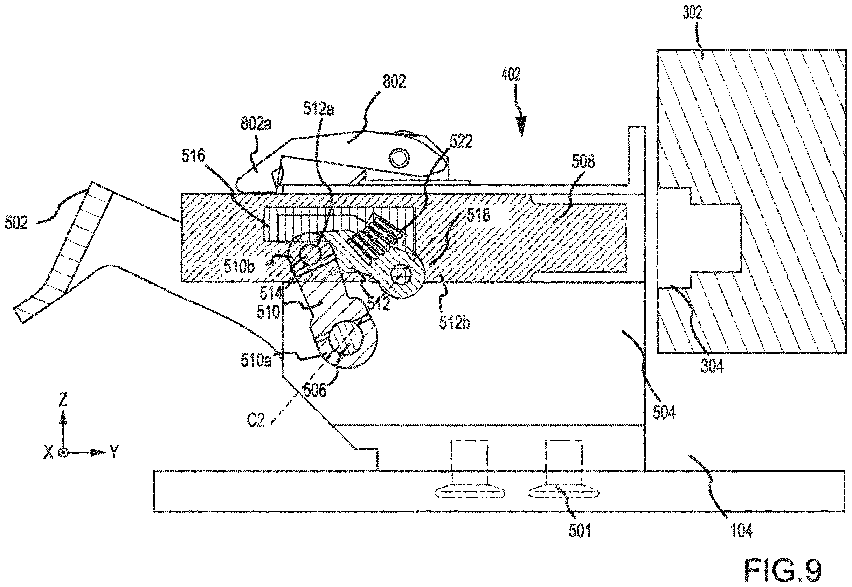

In various embodiments, as the user activates the cargo restraint assembly 402, an attenuation spring 520, which is biased against a rear, in a negative y-direction, of the plunger interconnect plate 516, provides for attenuation of the plunger 508 in a positive y-direction, to help lock the plunger 508 into the interface hole 304 of the modular container 302. In various embodiments, the attenuation provided by the attenuation spring 520 allows the user to activate the cargo restraint assembly 402 by releasing and rotating the actuation/de-actuation lever 502 in a clockwise direction about the rotation pin 506, which causes the coupling of the second end 510b of the first linkage to the first end 512a of the second linkage via pin 514 to move over the center line C1 between the rotation pin 506 and the pin 518. In various embodiments, compression spring 522 provides a restraint to keep the second end 510b of the first linkage 510 mechanically and rotatably coupled to the first end 512a of the second linkage 512 via pin 514 moved over the center line C1 in an activated state and to keep the second end 510b of the first linkage that is mechanically and rotatably coupled to the first end 512a of the second linkage 512 retracted over centerline C2 illustrated in FIG. 9 in a deactivated state. In that regard, the compression spring 522 provides a restraint to keep the plunger 508 locked in an outwardly extended state in an activated state or locked in an inwardly retracted state in a deactivated state. In various embodiments, responsive to the cargo restraint assembly 402 being activated and the plunger 508 not immediately locking into the interface hole 304 of the modular container 302, the attenuation provided by the attenuation spring 520 keeps a positive force of the plunger in the y-direction. In that regard, the user may be able to rock the modular container 302 FWD/AFT or side-to-side to align the plunger 508 with the interface hole 304 of the modular container 302 allowing the positive force of the plunger in the y-direction to "pop" the plunger 508 into the interface hole 304 of the modular container 302.

In various embodiments, once the distal end 508a of the plunger 508 translates into the interface hole 304 of the modular container 302, an attenuation lock 802 rotates about pin 804 such that a distal end 802a translated downward in a negative z-direction and blocks and/or other prevents the plunger 508 from attenuating, i.e. disengaging, in a negative y-direction, from the interface hole 304 of the modular container 302. In that regard, in various embodiments, the attenuation lock 802, responsive to the distal end 508a of the plunger 508 translating into the interface hole 304 of the modular container 302, attenuation lock 802 rotates in a counterclockwise direction about pin 804 to which the attenuation lock 802 is coupled such that a distal end 802a blocks and otherwise prevents the plunger 508 from attenuating, i.e. disengaging, in a negative y-direction.

Referring now to FIG. 9, a cross-sectional view of a cargo restraint assembly 402, including an attenuation lock, in a deactivated state is illustrated, in accordance with various embodiments. It is noted that FIG. 9 is similar to previously described FIG. 6 but includes the attenuation lock 802 of FIGS. 8A and 8B in a disengaged state, as is described hereafter. In various embodiments, the cargo restraint assembly 402 may be coupled to cargo deck 104 via fittings that are either integrated into the cargo deck 104 or integrated into an in-floor adapter within the cargo deck 104 and via the set of anchors 501 integrated into the cargo restraint assembly 402. In various embodiments, the cargo restraint assembly 402 includes the actuation/de-actuation lever 502 that is coupled to base assembly 504 of the cargo restraint assembly 402 via the rotation pin 506. In that regard, in various embodiments, the actuation/de-actuation lever 502 rotates about axis through the longitudinal center of the rotation pin 506.

In various embodiments, the actuation/de-actuation lever 502 is substantially a foot pedal that, responsive to being depressed and rotated in a counterclockwise direction about the rotation pin 506, deactivates the cargo restraint assembly 402 thereby disengaging the plunger 508 from the modular container 302. In various embodiments, the base assembly 504 may include a second positive stop that prevents a rotation of the actuation/de-actuation lever 502 beyond a defined counterclockwise angle. In various embodiments, a first linkage 510 includes the first end 510a and the second end 510b. In various embodiments, the first end 510a is coupled to and rotates simultaneously with the actuation/de-actuation lever 502 via the rotation pin 506. In various embodiments, the second end 510b is mechanically and rotatably coupled to the second linkage 512. In various embodiments, the second linkage 512 includes the first end 512a and the second end 512b. In that regard, in various embodiments, the second end 510b of the first linkage is mechanically and rotatably coupled to the first end 512a of the second linkage via pin 514. In various embodiments, the second end 512b is mechanically and rotatably coupled to the plunger interconnect plate 516. In various embodiments, the plunger interconnect plate 516 translates in a positive and negative y-direction based on the activation/deactivation of the actuation/de-actuation lever 502. In that regard, the second end 512b is mechanically and rotatably coupled to the plunger interconnect plate 516 via pin 518. In various embodiments, a distal end 508a of the plunger 508 is configured to retract inwardly, in a negative y-direction, from the base assembly 504 into the interface hole 304 of the modular container 302. In various embodiments, as the user deactivates the cargo restraint assembly 402, the attenuation spring 520, as is illustrated in FIG 5B, which is biased against a rear, in a negative y-direction, of the plunger interconnect plate 516, is compressed against the rear of the plunger interconnect plate 516. In various embodiments, compression spring 522 provides a restraint to keep the second end 510b of the first linkage 510 mechanically and rotatably coupled to the first end 512a of the second linkage 512 via pin 514 moved over the center line C1 in FIG. 5A in an activated state and to keep the second end 510b of the first linkage that is mechanically and rotatably coupled to the first end 512a of the second linkage 512 retracted over centerline C2 in a deactivated state. In that regard, the compression spring 522 provides a restraint to keep the plunger 508 locked in an outwardly extended state in an activated state or locked in an inwardly retracted state in a deactivated state.

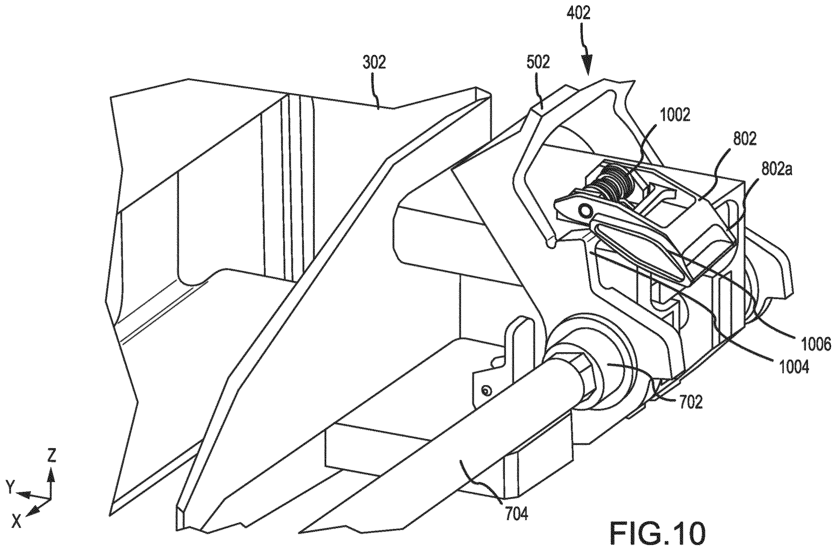

In various embodiments, responsive to the actuation/de-actuation lever 502 being depressed and rotated in a counterclockwise direction about the rotation pin 506, the actuation/de-actuation lever 502 comprises a protrusion, described hereafter in FIG. 10, that engages with and translates the distal end 802a of the attenuation lock 802 in a positive z-direction out of the translation path, in a negative y-direction, of the plunger 508. In that regard, in various embodiments, the attenuation lock 802, responsive to being acted upon by the protrusion on the actuation/de-actuation lever 502, rotates about pin 804 to which the attenuation lock 802 is coupled thereby translating the distal end 802a of the attenuation lock 802 in the positive z-direction.

Referring now to FIG. 10, an isometric view of a cargo restraint assembly 402, including an attenuation lock, being coupled to another cargo restraint assembly is illustrated, in accordance with various embodiments. It is noted that FIG. 10 is similar to previously described FIG. 7 but includes the attenuation lock 802 of FIGS. 8A and 8B in a engaged state, as is described hereafter. In various embodiments, as the user activates/deactivates the actuation/de-actuation lever 502, an interface 702, which may be mechanically coupled to both sides of the actuation/de-actuation lever 502, rotates with the rotation of the actuation/de-actuation lever 502. In various embodiments, when the actuation shaft/tube 404 is coupled between the interface 702 and a similar interface 702 on a paired cargo restraint assembly 402 associated with a same modular container 302 and the actuation/de-actuation lever 502 is activated/deactivated, both of the paired cargo restraint assemblies 402 activate or deactivate together.

In various embodiments, the attenuation lock 802 is mechanically coupled to a top potion of the cargo restraint assembly 402. In various embodiments, the attenuation lock 802 is biased via springs 1002 such that the distal end 802a is normally translated downward in a negative z-direction unless plunger 508 is disengaged from the interface hole 304 of the modular container 302 and is translated in the negative y-direction. In various embodiments, responsive to the distal end 508a of the plunger 508 translating into the interface hole 304 of the modular container 302, the attenuation lock 802 rotates in a counterclockwise direction about pin 804 to which the attenuation lock 802 is coupled such that a distal end 802a blocks and otherwise prevents the plunger 508 from attenuating, i.e. disengaging, in a negative y-direction. In various embodiments, responsive to the actuation/de-actuation lever 502 being depressed and rotating in a counterclockwise direction about the rotation pin 506, the protrusion 1004 on the actuation/de-actuation lever 502 engages with an extension 1006 on the attenuation lock 802 so as to translates the distal end 802a of the attenuation lock 802 in a positive z-direction out of the translation path, in a negative y-direction, of the plunger 508. In that regard, in various embodiments, the attenuation lock 802, responsive to the extension 1006 being acted upon by the protrusion 1004 on the actuation/de-actuation lever 502, rotates about pin 804 to which the attenuation lock 802 is coupled thereby translating the distal end 802a of the attenuation lock 802 in the positive z-direction.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A cargo restraint assembly for a cargo handling system, comprising:
a base assembly comprising:
a plunger, wherein, responsive to being activated, the plunger is configured to extend in a first direction into an opening within a modular container thereby restraining the modular container in a second direction, the second direction being perpendicular to the first direction; and
a compression spring, wherein the compression spring is configured to provide a restraint to keep the plunger locked in an outwardly extended state in an activated state or locked in an inwardly retracted state in a deactivated state.

2. The cargo restraint assembly of claim 1, wherein the base assembly further comprises:
an actuation/de-actuation lever, wherein the actuation/de-actuation lever is mechanically and rotatably coupled to the base assembly via a rotation pin and wherein the actuation/de-actuation lever is configured to rotate about axis through a longitudinal center of the rotation pin.

3. The cargo restraint assembly of claim 2, wherein the base assembly further comprises:
a first linkage;
a second linkage; and
a plunger interconnect plate, wherein the actuation/de-actuation lever is coupled to the plunger via the first linkage, the second linkage, and the plunger interconnect plate.

4. The cargo restraint assembly of claim 3, wherein the actuation/de-actuation lever is coupled to a first end of the first linkage via the rotation pin such that the first linkage rotates simultaneously with the actuation/de-actuation lever.

5. The cargo restraint assembly of claim 4, wherein a second end of the first linkage is mechanically and rotatably coupled to a first end of the second linkage via a first pin, wherein a second end of the second linkage is mechanically and rotatably coupled to the plunger interconnect plate via a second pin, and wherein the plunger interconnect plate is coupled to the plunger.

6. The cargo restraint assembly of claim 5, wherein the mechanical and rotatable coupling between the second end of the first linkage and the first end of the second linkage is configured to move over a center line thereby providing an over-center locking mechanism that locks the plunger at an outermost extension in the first direction from the base assembly into the opening within the modular container.

7. The cargo restraint assembly of any of claim 3 to 6, wherein the compression spring provides the restraint to keep the second end of the first linkage that is mechanically and rotatably coupled to the first end of the second linkage moved over a center line in the activated state and to keep the second end of the first linkage that is mechanically and rotatably coupled to the first end of the second linkage retracted in the deactivated state.

8. The cargo restraint assembly of any preceding claim, wherein the cargo restraint assembly is a first cargo restraint assembly and wherein the base assembly further comprises:
an interface, wherein the interface is configured to receive an actuation shaft/tube that couples the first cargo restraint assembly to a second cargo restraint assembly in order that the first cargo restraint assembly and the second cargo restraint assembly are activated or deactivated simultaneously.

9. The cargo restraint assembly of any preceding claim, wherein the base assembly further comprises:
a set of anchors integrated into the cargo restraint assembly, wherein the set of anchors couple the cargo restraint assembly to a cargo deck of a cargo compartment.

10. The cargo restraint assembly of any preceding claim, wherein the base assembly further comprises:
an attenuation lock, wherein the attenuation lock is configured to block the plunger from attenuating from the activated state unless acted upon by an actuation/de-actuation lever.

11. A cargo handling system, comprising:
a plurality of cargo restraint assemblies, each cargo restraint assembly of the plurality of cargo restraint assemblies being according to any of claims 1 to 10.

12. An aircraft, comprising:
a cargo deck; and
the cargo handling system of claim 11, the cargo handling system disposed on the cargo deck.

13. The aircraft of claim 12, wherein each cargo restraint assembly of the plurality of cargo restraint assemblies further comprises:
an interface, wherein the interface is configured to receive an actuation shaft/tube that couples a first cargo restraint assembly of the plurality of cargo restraint assemblies to a second cargo restraint assembly of the plurality of cargo restraint assemblies in order that the first cargo restraint assembly and the second cargo restraint assembly are activated or deactivated simultaneously.
